Europäisches Patentamt

(19) European Patent Office

Office européen des brevets

(11) Numéro de publication : **0 033 672**
**B1**

(12) **FASCICULE DE BREVET EUROPÉEN**

(45) Date de publication du fascicule du brevet :
**18.01.84**

(21) Numéro de dépôt : **81400040.2**

(22) Date de dépôt : **13.01.81**

(51) Int. Cl.³ : **G 06 F 13/00**, H 04 L 11/20

---

(54) **Dispositif d'aiguillage de données numériques.**

---

(30) Priorité : **31.01.80 FR 8002088**

(43) Date de publication de la demande :
**12.08.81 Bulletin 81/32**

(45) Mention de la délivrance du brevet :
**18.01.84 Bulletin 84/03**

(84) Etats contractants désignés :
**BE DE IT LU NL SE**

(56) Documents cités :
**EP-A- 0 014 152**
**FR-A- 2 106 178**
**US-A- 3 761 888**
**US-A- 3 979 733**

(73) Titulaire : **THOMSON-CSF TELEPHONE**
**146, Boulevard de Valmy**
**F-92707 Colombes (FR)**

(72) Inventeur : **Merriaux, Philippe Marie François**
**THOMSON-CSF SCPI 173, Bd. Haussmann**
**F-75360 Paris Cedex 08 (FR)**
Inventeur : **Nicolas, Jean-Yves**
**THOMSON-CSF SCPI 173, Bd. Haussmann**
**F-75360 Paris Cedex 08 (FR)**

(74) Mandataire : **El Manouni, Josiane et al**
**THOMSON-CSF SCPI 173, Bld Haussmann**
**F-75379 Paris Cedex 08 (FR)**

EP 0 033 672 B1

Jouve, 18, rue St-Denis, 75001 Paris, France

# 0 033 672

### Dispositif d'aiguillage de données numériques

La présente invention concerne un dispositif d'aiguillage de données numériques émises par « n » circuits d'entrées vers un circuit de sortie.

Un tel dispositif s'applique tout particulièrement dans un réseau de commutation de données numériques par paquets, dans lequel l'interface entre opérateurs (situés aux nœuds du réseau) et l'intérieur du réseau est constitué par « n » circuits d'entrée et par « n » circuits de sortie, chaque circuit d'entrée pouvant émettre des données numériques vers n'importe lequel des circuits de sortie. Il est alors nécessaire de prévoir un dispositif d'aiguillage de données numériques entre les « n » circuits d'entrée et chacun des « n » circuits de sortie.

Un réseau de commutation de ce type est décrit dans la demande de brevet européen EP-A-0 014 152 (le matériel téléphonique) publiée le 06.08.80.

Dans ce réseau de commutation, le dispositif d'aiguillage de données numériques utilise pour mémoires de données des files d'attente du type « FIFO ».

Le brevet US-A 3 761 888 (FLYNN) concerne un dispositif d'aiguillage de données numériques comportant des mémoires vives destinées à mémoriser les données numériques émises par les circuits d'entrée, et un circuit de gestion de la lecture de ces mémoires, apte à mémoriser la suite des emplacements d'écriture des données dans ces mémoires, afin de permettre la lecture de ces données selon la même suite.

La présente invention a pour objet un dispositif d'aiguillage de données numériques permettant d'éviter tout conflit en cas d'émission simultanée de données numériques par plusieurs circuits d'entrée.

Ce résultat est obtenu grâce à un dispositif d'aiguillage de données numériques conforme à la revendication.

Les objets et caractéristiques de l'invention apparaîtront plus clairement à la lecture de la description suivante d'exemples de réalisation, ladite description étant faite en relation avec les dessins ci-annexés, dans lesquels :

la figure 1 représente le schéma d'un dispositif d'aiguillage de données numériques conforme à l'invention, lorsque ces données sont des messages quelconques, de longueur fixe,

la figure 2 représente un diagramme des temps de signaux apparaissant sur la figure 1,

la figure 3 représente le schéma d'un dispositif d'aiguillage de données numériques conforme à l'invention, lorsque ces données sont des paquets de longueur variable.

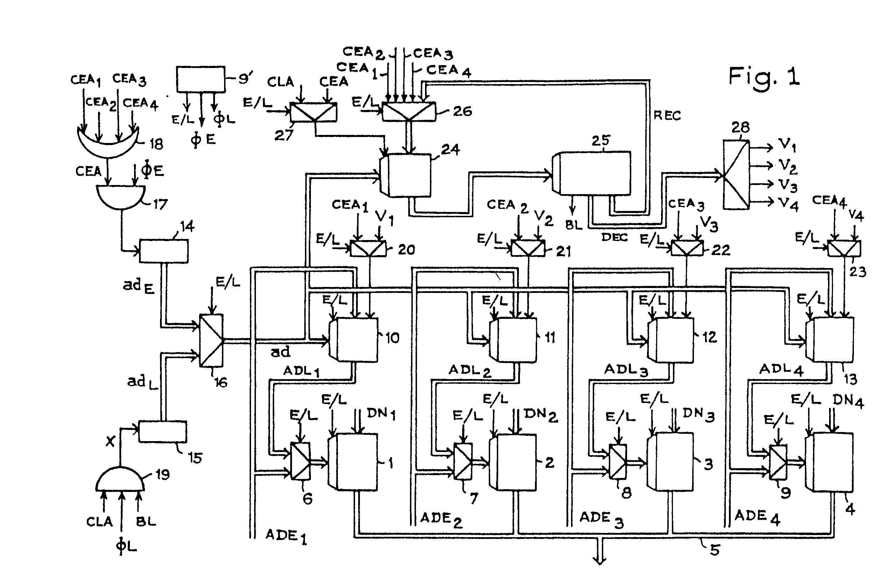

A titre d'exemple, la figure 1 représente le schéma d'un dispositif d'aiguillage de données numériques correspondant au cas où « n » est égal à quatre. Ce dispositif a donc pour but d'aiguiller les données numériques émises par quatre circuits d'entrée $E_1$, $E_2$, $E_3$ et $E_4$ vers un circuit de sorties S (non représentés).

Le dispositif d'aiguillage comporte quatre mémoires vives 1, 2, 3 et 4, dites mémoires d'attente, munies chacune d'entrées de données reliées à des premières sorties de données de l'un des circuits d'entrée et de sorties de données reliées à une ligne « omnibus » 5 dite ligne « omnibus » de sortie. La ligne « omnibus » de sortie 5 est reliée à l'entrée du circuit de sortie S. Les entrées d'adresse des mémoires vives 1, 2, 3 et 4 sont respectivement reliées aux sorties de quatre multiplexeurs 6, 7, 8 et 9, dits multiplexeurs d'adressage des mémoires d'attente. Chacun des multiplexeurs 6, 7, 8 et 9 est muni de premières entrées de données reliées à des secondes sorties de l'un des circuits d'entrée, de secondes entrées de données, et d'une entrée de commande qui reçoit un signal E/L, dit signal de rythme local fourni par une première sortie d'un circuit d'horloge locale 9'. Le signal E/L est également reçu sur l'entrée de sélection de lecture-écriture des mémoires vives 1 à 4. Les mémoires vives 1, 2, 3 et 4 sont respectivement destinées à mémoriser les données numériques $DN_1$, $DN_2$, $DN_3$ et $DN_4$ émises par les circuits d'entrée $E_1$, $E_2$, $E_3$ et $E_4$, et disponibles sur les premières sorties de ces circuits. Les données numériques $ADE_1$, $ADE_2$, $ADE_3$ et $ADE_4$ disponibles sur les secondes sorties de chaque circuit d'entrée représentent l'adresse d'écriture, dans la mémoire d'attente associée à ce circuit d'entrée, des données numériques disponibles sur les premières sorties de ce circuit. On suppose donc que la gestion de l'écriture des mémoires d'attente est assurée par les circuits d'entrée.

Le dispositif d'aiguillage de données numériques comporte également un circuit de gestion de la lecture des mémoires d'attente. Le circuit de gestion de la lecture des mémoires d'attente comporte quatre mémoires vives 10, 11, 12 et 13, dites mémoires de gestion, munies chacune d'entrées de données reliées aux secondes sorties de l'un des circuits d'entrée, et de sorties reliées aux secondes entrées de données de l'un des multiplexeurs 6 à 9. Les sorties des mémoires de gestion 10 à 13 fournissent des données $ADL_1$ à $ADL_4$ représentant l'adresse de lecture des mémoires d'attente 1 à 4. Les entrées d'adresse des mémoires 10 à 13 sont reliées aux sorties d'un circuit d'adressage séquentiel en lecture et en écriture qui est commun aux mémoires 10 à 13.

Ce circuit d'adressage séquentiel comporte un compteur 14, dit compteur d'adressage écriture, un compteur 15, dit compteur d'adressage lecture et un multiplexeur 16, dit multiplexeur d'adressage des mémoires de gestion. Le compteur 14 est muni d'une entrée d'horloge qui est reliée à la sortie d'une porte « ET » 17, à deux entrées. Une première entrée de la porte « ET » 17 reçoit un signal $\phi_E$, dit signal de commande d'incrémentation du compteur fourni par une deuxième sortie du circuit 9'. Une deuxième entrée de la porte « ET » 17 reçoit le signal de sortie CEA d'une porte « OU » 18 munie de quatre entrées reliées chacune à une troisième sortie de l'un des circuits d'entrée et fournissant respectivement les signaux $CEA_1$, $CEA_2$, $CEA_3$ et $CEA_4$, dits signaux de commande d'écriture dans les mémoires d'attente.

Le compteur 15 est muni d'une entrée d'horloge qui est reliée à la sortie d'une porte « ET » 19 à trois entrées. Une première entrée de la porte « ET » 19 reçoit un signal $\phi_L$, dit signal de commande d'incrémentation du compteur 15, fourni par une troisième sortie du circuit 9'. Une deuxième entrée de la porte « ET » 19 reçoit un signal CLA, dit signal de commande de lecture des mémoires d'attente, fourni par le circuit de sortie.

Le multiplexeur 16 est muni de premières entrées de données reliées aux sorties du compteur 14, de secondes entrées de données reliées aux sorties du compteur 15, et d'une entrée de commande qui reçoit le signal E/L.

Les sorties du compteur 14 fournissent des données $ad_E$ représentant l'adresse d'écriture des mémoires de gestion, les sorties du compteur 15 fournissent des données $ad_L$ représentant l'adresse de lecture des mémoires de gestion, et les sorties du multiplexeur 16 fournissent des données ad représentant l'adresse des mémoires de gestion à un instant donné. Les mémoires de gestion ayant un circuit d'adressage commun, chacune des mémoires de gestion 10 à 13 est par ailleurs munie d'une entrée de validation reliée à la sortie de l'un des multiplexeurs 20 à 23, qui forment un circuit de validation d'une mémoire de gestion parmi « n ». Chacun des multiplexeurs 20 à 23 est muni d'une première entrée de données reliées à la troisième sortie de l'un des circuits d'entrée, d'une seconde entrée de données, et d'une entrée de commande qui reçoit le signal E/L.

Le dispositif de gestion de la lecture des mémoires d'attente comporte également un circuit d'établissement de priorité de lecture des mémoires d'attente et de blocage de l'adressage en lecture des mémoires de gestion en cas d'émission simultanée par les n circuits d'entrée, appelé par la suite circuit d'établissement de priorité et de blocage.

Le circuit d'établissement de priorité et de blocage comporte une mémoire vive 24, dite mémoire d'état des circuits d'entrée (ou mémoire d'état), une mémoire morte 25, dite mémoire de priorité, un multiplexeur 26, dit multiplexeur d'écriture de la mémoire d'état, un multiplexeur 27, dit multiplexeur de sélection de lecture-écriture de la mémoire d'état, et un décodeur 28.

La mémoire d'état 24 est munie d'entrées d'adresse reliées aux sorties du multiplexeur 16, d'entrées de données reliées aux sorties du multiplexeur 26 et de sorties reliées aux entrées d'adresse de la mémoire morte 25. La mémoire morte 25 est munie de sorties que l'on répartit en premières, deuxièmes et troisièmes sorties, fournissant trois types de données différentes : REC, DEC et BL. Le multiplexeur 26 est muni de premières entrées de données reliées aux premières sorties de la mémoire morte 25, de secondes entrées de données qui reçoivent les signaux $CEA_1$ à $CEA_4$, et d'une entrée de commande qui reçoit le signal E/L. La mémoire vive 24 est également munie d'une entrée de sélection de lecture-écriture, qui est reliée à la sortie du multiplexeur 27. Le multiplexeur 27 est quant à lui muni d'une première entrée de données qui reçoit le signal CEA, d'une seconde entrée de données qui reçoit le signal CLA, et d'une entrée de commande qui reçoit le signal E/L.

Le décodeur 28 est muni d'entrées de données reliées aux deuxièmes sorties de la mémoire 25, d'une première, d'une deuxième, d'une troisième et d'une quatrième sortie reliées respectivement à la seconde entrée de données des multiplexeurs 20 à 23, et fournissant respectivement les signaux $V_1$, $V_2$, $V_3$ et $V_4$, dits signaux de validation en lecture des mémoires de gestion.

La troisième sortie de la mémoire 25 est reliée à la troisième entrée de la porte « ET » 19, cette troisième entrée constituant l'entrée de blocage du circuit d'adresse séquentiel en lecture.

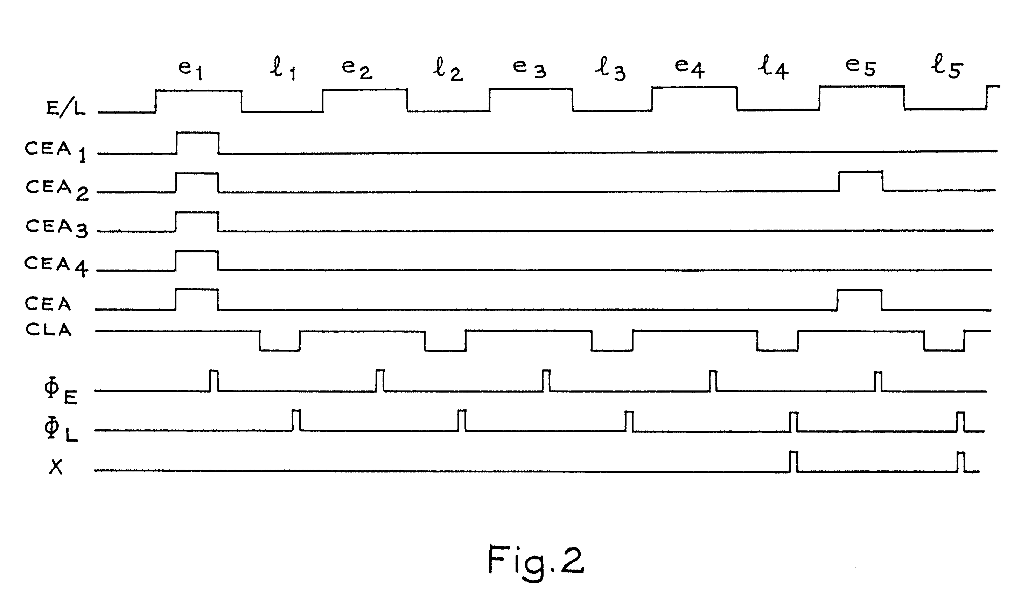

Le fonctionnement du dispositif d'aiguillage de données numériques représenté à la figure 1 est maintenant décrit en relation avec la figure 2 et à l'aide de l'exemple suivant. On suppose une première émission des circuits d'entrée au cours de laquelle les circuits d'entrée $E_1$, $E_2$, $E_3$ et $E_4$ émettent simultanément des données numériques vers le circuit de sortie, suivie d'une deuxième émission au cours de laquelle seul le circuit d'entrée $E_2$ émet des données numériques vers le circuit de sortie. Lors de la première émission des circuits d'entrée, les signaux $CEA_1$, $CEA_2$, $CEA_3$ et $CEA_4$, et par conséquent le signal CEA, sont actifs, c'est-à-dire ici sont portés au niveau logique «1». L'émission des circuits d'entrée doit se situer à l'intérieur de la phase d'écriture e du signal E/L, représentée ici par le niveau logique « 1 ».

De même le signal CLA, par lequel le circuit de sortie commande la lecture des mémoires d'attente, doit être actif (c'est-à-dire ici présenter un niveau logique « 0 ») à l'intérieur de la phase de lecture I du signal E/L, représentée par un niveau logique « 0 », contrairement au signal CEA, le signal CLA est périodique.

Au cours de la phase d'écriture $e_1$, les données numériques $DN_1$ à $DN_4$ sont inscrites dans les mémoires d'attente 1 à 4, les adresses d'écriture $ADE_1$ à $ADE_4$ de ces données numériques sont inscrites dans les mémoires de gestion 1 à 4, à une adresse $ad_E$, (ces mémoires étant toutes validées en écriture par les signaux $CEA_1$ à $CEA_4$). En même temps les valeurs des signaux $CEA_1$ à $CEA_4$ (c'est-à-dire ici le mot binaire, dit mot d'état, «1111 ») sont inscrites dans la mémoire d'état 24 (le multiplexeur 26 sélectionnant ces données puisque l'on est dans la phase d'écriture). A la fin de la phase d'écriture $e_1$ le compteur 14 est incrémenté grâce au signal $\phi_E$ qui présente alors une impulsion et son contenu passe alors à la valeur « $ad_E + 1$ ».

Au cours de la phase de lecture $I_1$, le mot d'état « 1111 » est tout d'abord lu dans la mémoire d'état (la mémoire d'état 24 étant validée en lecture par le signal CLA qui présente un niveau logique « 0 »). Le mot d'état « 1111 » est utilisé pour adresser la mémoire morte 25 qui fournit alors au décodeur 28 des données, par exemple les données « 00 » indiquant que la priorité de lecture est donnée à la première mémoire d'attente. Alors seul le signal $V_1$ fourni par la sortie du décodeur 28 sera actif, par conséquent seule la mémoire de gestion 10 sera validée, et seule la mémoire d'attente 1 sera lue, (le circuit de sortie recevant alors dans un premier temps les données émises par le circuit d'entrée $E_1$).

La mémoire morte 25 fournit également au multiplexeur 26 le mot d'état à réécrire à la place du mot « 1111 », qui sera ici le mot « 0111 ». Ce mot, sélectionné par le multiplexeur 26 au cours de la phase $I_1$ est écrit dans la mémoire d'état entre la fin de la phase $I_1$ et le début de la phase $e_2$, c'est-à-dire lorsque le signal CLA présente un niveau logique « 1 ». Et ce mot est écrit à la même adresse que le mot d'état précédent « 1111 » car l'incrémentation du compteur 15 est inhibée par l'intermédiaire du signal BL (de valeur binaire « 0 ») fourni par la mémoire morte 25. Lors de la phase d'écriture $e_2$ aucune opération d'écriture n'est effectuée dans la mémoire d'état puisque le signal CEA reste au niveau logique « 0 ».

Puis lors de la phase de lecture $I_2$ le mot « 0111 » est à son tour utilisé pour adresser la mémoire morte 25 qui fournit alors au décodeur 28 des données « 01 » permettant dans un deuxième temps d'aiguiller les données émises par le circuit d'entrée $E_2$ vers le circuit de sortie S. La mémoire morte 25 fournit également à la mémoire d'état le mot de réécriture « 0011 ». La mémoire morte 25 fournit également un signal BL qui est toujours au niveau logique « 0 », ce qui permet de lire toutes les mémoires de gestion à la même adresse, c'est-à-dire de lire dans les mémoires d'attente des informations qui ont bien été émises simultanément par les circuits d'entrée. Le mot d'état « 0011 » est écrit dans la mémoire d'état entre la fin de la phase $I_2$ et le début de la phase $e_3$ (le signal CLA présentant alors un niveau logique « 1 »). Lors de la phase $e_3$ aucune opération d'écriture n'est effectuée dans la mémoire d'état puisque le signal CEA reste au niveau logique « 0 ».

Puis lors de la phase de lecture $I_3$ le mot « 0011 » est à son tour utilisé pour adresser la mémoire morte 25 qui fournit alors au décodeur 28 des données « 10 » permettant dans un troisième temps, d'aiguiller les données émises par le circuit d'entrée $E_3$ vers le circuit de sortie 5. La mémoire morte 25 fournit également à la mémoire d'état le mot de réécriture « 0001 », et à la porte « ET » 19 un signal BL qui est toujours au niveau logique « 0 ». Le mot d'état « 0001 » est écrit dans la mémoire d'état entre la fin de la phase $I_3$ et le début de la phase $e_4$.

Lors de la phase $e_4$, aucune opération d'écriture n'est effectuée dans la mémoire d'état puisque le signal CEA reste au niveau logique « 1 ».

Puis lors de la phase de lecture $I_4$ le mot « 0001 » est à son tour utilisé pour adresser la mémoire morte 25 qui fournit alors au décodeur 28 des données « 11 » permettant, dans un quatrième temps, d'aiguiller les données numériques émises par le circuit d'entrée $E_4$ vers le circuit de sortie 5. La mémoire morte 25 fournit également à la mémoire d'état le mot de réécriture « 0000 » et à la porte « ET » 19 un signal BL qui est cette fois au niveau logique « 1 ». Ainsi, lorsque la phase de lecture $I_4$ se termine, le compteur 15 peut être incrémenté, grâce au signal X de sortie de la porte « ET » 19 qui présente alors une impulsion. Lors de la prochaine phase de lecture, les données stockées dans la mémoire d'état et dans les mémoires de gestion seront lues à l'adresse « $ad_1$ + 1 ». On voit donc sur cet exemple que grâce au circuit d'établissement de priorité et de blocage, le dispositif d'aiguillage restitue successivement, dans un ordre établi arbitrairement par l'utilisateur, les données numériques émises simultanément par plusieurs circuits d'entrée. Ceci permet donc d'éviter tout conflit en cas d'émission simultanée par plusieurs circuits d'entrée. On peut faire le même raisonnement lorsque le nombre de circuits d'entrée émettant simultanément est, non plus égal mais inférieur à n. On arrive ainsi à établir la programmation de la mémoire morte 25, qui est donnée dans le tableau ci-dessous, également à titre d'exemple puisqu'elle correspond au cas où « n » est égal à quatre et où l'on suppose que le circuit d'entrée $E_1$ + 1 est prioritaire par rapport au circuit d'entrée $E_1$.

| ADRESSE | REC | DEC | BL |
|---------|------|-----|-----|
| 0000 | X | X | X |
| 0001 | 0000 | 11 | 1 |
| 0010 | 0000 | 10 | 1 |
| 0011 | 0001 | 10 | 0 |
| 0100 | 0000 | 01 | 1 |
| 0101 | 0001 | 01 | 0 |
| 0110 | 0010 | 01 | 0 |
| 0111 | 0011 | 01 | 0 |
| 1000 | 0000 | 00 | 1 |
| 1001 | 0001 | 00 | 0 |
| 1010 | 0010 | 00 | 0 |
| 1011 | 0011 | 00 | 0 |
| 1100 | 0100 | 00 | 0 |
| 1101 | 0101 | 00 | 0 |
| 1110 | 0110 | 00 | 0 |
| 1111 | 0111 | 00 | 0 |

Le symbole X signifie qu'aucune donnée n'est stockée à cette adresse.

Lors de la phase d'écriture $e_5$ correspondant à la deuxième émission, les données numériques émises par le circuit d'entrée $E_2$ sont stockées dans la mémoire d'attente 2, l'adresse d'écriture dans la mémoire d'attente 2, est stockée dans la mémoire de gestion 11 (à l'adresse « $ad_E + 1$ »), et le mot d'état « 0100 » est stocké dans la mémoire d'état 24, également à l'adresse « $ad_E + 1$ ». A la fin de la phase d'écriture $e_5$, le compteur 14 est incrémenté et fournit alors l'adresse « $ad_E + 2$ », qui sera utilisée lors de la phase d'écriture correspondante à la prochaine émission. Lors de la phase de lecture $l_5$ correspondant à la deuxième émission, le mot « 0100 » est tout d'abord lu dans la mémoire d'état, et est utilisé pour adresser la mémoire morte 25. La mémoire morte 25 fournit au décodeur 28 des données « 01 » permettant de valider la mémoire de gestion 11, et donc d'aiguiller vers le circuit de sortie les données numériques émises par le circuit d'entrée $E_2$. La mémoire morte 25 fournit également à la mémoire d'état 24 le mot de réécriture « 0000 » et à la porte « ET » un signal BL de niveau logique « 1 ». Ainsi, à la fin de la phase de lecture $l_5$, le compteur 15 est incrémenté et fournit alors l'adresse « $ad_E + 2$ » qui sera utilisée lors de la prochaine phase de lecture.

L'incrémentation des compteurs 14 et 15, respectivement à la fin des phases d'écriture et de lecture, fait que le dispositif d'aiguillage restitue les données numériques dans leur ordre d'arrivée à l'entrée de ce dispositif.

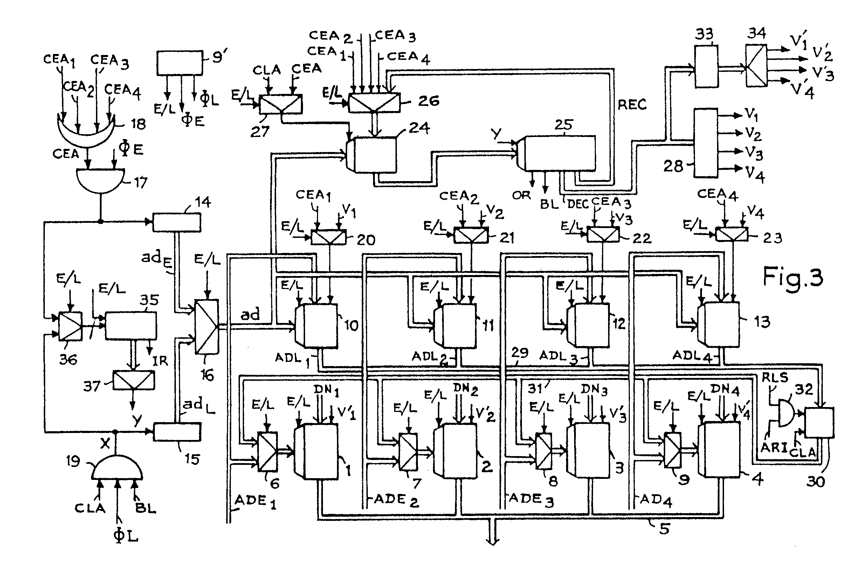

Sur la figure 3, qui correspond au cas où les données numériques à aiguiller sont des paquets de longueur variable, on retrouve les mêmes éléments que sur la figure 1 (portant les mêmes références), avec les ajouts et modifications suivants.

Les sorties des mémoires de gestion 10, 11, 12 et 13 ne sont plus respectivement reliées aux secondes entrées des multiplexeurs 6, 7, 8 et 9, mais à une ligne « omnibus » 29, reliée elle-même aux entrées de chargement d'un compteur 30. Les sorties du compteur 30 sont reliées à une ligne « omnibus » 31 reliée elle-même aux secondes entrées de données des multiplexeurs 6, 7, 8 et 9. L'entrée de commande de chargement du compteur 30 reçoit le signal CLA. L'entrée d'horloge du compteur 30 est reliée à la sortie d'une porte « ET » 32 à deux entrées. Une première entrée de la porte « ET » 32 reçoit un signal RLS de rythme de lecture, par le circuit de sortie, des paquets stockés dans les mémoires d'attente. Une deuxième entrée de la porte « ET » 32 reçoit un signal ARI d'arrêt d'incrémentation du compteur 30, fourni par le circuit de sortie (par exemple à la détection d'un élément binaire indiquant la fin du paquet).

Les mémoires d'attente 1, 2, 3 et 4 étant maintenant adressées en lecture par la même adresse (fournie par la ligne « omnibus » 30) il est nécessaire de les valider séparément. Pour cela il est prévu un registre 33 muni d'entrées reliées aux secondes sorties de la mémoire morte 25, et un décodeur 34 muni d'entrées reliées aux sorties du registre 33 et de quatre sorties fournissant respectivement les signaux $V'_1$, $V'_2$, $V'_3$ et $V'_4$. Les signaux $V'_1$, $V'_2$, $V'_3$ et $V'_4$ sont appliqués respectivement aux entrées de validation de sortie des mémoires 1, 2, 3 et 4.

Par ailleurs, les paquets émis par les circuits d'entrée ayant des longueurs variables, les compteurs 14 et 15 peuvent être incrémentés à des rythmes différents. Pour éviter alors des recouvrements de lecture ou d'écriture des mémoires d'attente, il est prévu un compteur 35 muni d'une entrée d'horloge reliée à la sortie d'un multiplexeur 36, muni lui-même d'une première entrée de donnée qui est reliée à la sortie de la porte « ET » 17, d'une seconde entrée de données qui est reliée à la sortie de la porte « ET » 19, et d'une entrée de commande qui reçoit le signal E/L. L'entrée de commande de sens de comptage du compteur 35 reçoit le signal E/L, de sorte que le compteur 35 est incrémenté par l'horloge du compteur 14 et décrémenté par l'horloge du compteur 15.

Les sorties du compteur 35 sont reliées à un décodeur 37 qui détecte la valeur « 0 » des sorties du compteur 37 et qui fournit un élément binaire supplémentaire d'adressage Y à la mémoire morte 25. La mémoire 25 est munie d'une sortie supplémentaire qui fournit un signal OR au circuit de sortie. Ce signal OR indique au circuit de sortie si des données sont disponibles en lecture dans les mémoires d'attente.

La sortie de retenue du compteur 35 fournit également un signal IR aux circuits d'entrée, indiquant si des emplacements des mémoires d'attente sont disponibles pour accueillir des données en écriture. Le dispositif d'aiguillage de paquets de longueurs variables décrit à la figure 3 fonctionne de la manière suivante.

Les circuits d'entrée fournissent uniquement les adresses de début de paquets ($ADE_1$, $ADE_2$, $ADE_3$ et $ADE_4$), ce qui permet de réduire assez considérablement la taille des mémoires de gestion. C'est le compteur 30 qui permet, connaissant l'adresse de début de paquet, de générer les adresses des données qui constituent la suite du paquet, aussi longtemps que le circuit de sortie n'a pas détecté dans les mémoires d'attente un message indiquant la fin du paquet (le signal ARI d'arrêt d'incrémentation étant actif lorsque le circuit de sortie détecte ce message).

Si, au cours d'une durée déterminée les paquets écrits dans les mémoires d'attente sont plus courts que les paquets lus dans les mémoires d'attente (c'est-à-dire plus courts que les paquets écrits pendant la durée précédente), le compteur 14 est incrémenté plus vite que le compteur 15. Il se peut alors que le compteur 35 atteigne sa valeur maximale qui est égale à la capacité des mémoires de gestion (débordement du compteur). Dans ce cas, le signal IR indique par exemple aux circuits d'entrée que l'on donne priorité à la lecture des mémoires d'attente.

Par contre, si au cours d'une durée déterminée, les paquets lus dans les mémoires d'attente sont plus courts que les paquets écrits dans les mémoires d'attente, le compteur 15 est incrémenté plus vite que le

5

## 0 033 672

compteur 14. Il se peut alors que le compteur 35 reprenne la valeur « 0 » (retour à zéro du compteur). Dans ce cas, le signal Y, en combinaison avec l'adresse de la mémoire morte 25 fournie par la mémoire 24, fournit le signal OR. Si l'adresse fournie par la mémoire 24 est constituée par le mot d'état « 0000 », le signal OR indique au circuit de sortie que les mémoires d'attente sont vides. En revanche, si l'adresse fournie par la mémoire 24, n'est pas constituée par le mot d'état « 0000 », cela signifie que certaines mémoires d'attente ne sont pas encore vides car un cycle de lecture de paquets ayant été émis simultanément par plusieurs circuits d'entrée est en cours.

## Revendications

1. Dispositif d'aiguillage de données numériques émises par « n » circuits d'entrée vers un circuit de sortie, comportant d'une part, « n » mémoires vives, dites mémoires d'attente (1, 2, 3, 4), destinées à mémoriser chacune les données numériques émises par l'un des « n » circuits d'entrée, d'autre part un circuit de gestion de lecture des mémoires d'attente apte à mémoriser la suite des emplacements d'écriture des données dans les mémoires d'attente, afin de permettre la lecture de ces données selon la même suite, caractérisé en ce que le circuit de gestion de lecture des mémoires d'attente comporte :
— « n » mémoires vives, dites mémoires de gestion (10, 11, 12, 13) associées chacune à l'une des « n » mémoires d'attente, destinées à mémoriser chacune les adresses d'écriture de la mémoire d'attente qui lui est associée et munies chacune de sorties reliées aux entrées d'adresse de lecture de la mémoire d'attente qui lui est associée,
— un circuit d'adressage séquentiel en écriture et en lecture (14, 15, 16, 17, 18, 19), commun aux « n » mémoires de gestion, incrémenté en écriture lors de chaque écriture par un circuit d'entrée dans les mémoires d'attente, et en lecture, lors de chaque lecture des mémoires d'attente par le circuit de sortie,
— un circuit (24, 25, 26, 27, 28) d'établissement de priorité de lecture des mémoires d'attente, et de blocage du circuit d'adressage séquentiel en lecture, en cas d'émission simultanée par plusieurs circuits d'entrée,
— un circuit (20, 21, 22, 23) de validation d'une mémoire de gestion parmi « n », la validation étant effectuée lors de l'écriture des mémoires de gestion par le circuit d'entrée associé à la mémoire de gestion, et lors de la lecture des mémoires de gestion par le circuit d'établissement de priorité et de blocage.

2. Dispositif selon la revendication 1, dans lequel chaque circuit d'entrée fournit un signal de commande d'écriture dans les mémoires d'attente, et dans lequel le circuit de sortie fournit un signal de commande de lecture des mémoires d'attente, caractérisé en ce que le circuit d'adressage séquentiel en écriture et en lecture comporte un compteur d'adressage-écriture (14) incrémenté par le signal de sortie (CEA) d'une porte « OU » (18) qui reçoit les signaux de commande d'écriture (CEA1-CEA4) provenant des « n » circuits d'entrée, un compteur d'adressage-lecture (15), incrémenté par le signal de commande de lecture (CLA) provenant du circuit de sortie, et un multiplexeur (16) d'adressage des mémoires de gestion muni de premières entrées ($ad_E$) de données reliées aux sorties du compteur d'adressage-écriture, de secondes entrées ($ad_L$) de données reliées aux sorties du compteur d'adressage-lecture, de sorties (ad) reliées aux entrées d'adresse des « n » mémoires de gestion, et d'une entrée (E/L) de commande qui reçoit un signal de rythme local.

3. Dispositif selon les revendications 1 et 2, caractérisé en ce que le circuit d'établissement de priorité et de blocage comporte :
— une mémoire vive (24), dite mémoire d'état des circuits d'entrée, munie d'entrées (ad) d'adresses reliées aux sorties du circuit d'adressage séquentiel, d'une entrée de sélection de lecture-écriture reliée à la sortie d'un multiplexeur (27) de sélection de lecture-écriture de la mémoire d'état, muni lui-même d'une première entrée de données qui reçoit le signal de sortie (CEA) de la porte « OU » (18) qui reçoit les signaux de commande d'écriture provenant des « n » circuits d'entrée, d'une seconde entrée (CLA) de données qui reçoit le signal de commande de lecture provenant du circuit de sortie et d'une entrée (E/L) de commande qui reçoit le signal de rythme local, les entrées de données de la mémoire d'état étant reliées aux sorties d'un multiplexeur d'écriture (26) de la mémoire d'état muni lui-même de premières entrées (CEA1-CEA4) de données qui reçoivent les signaux de commande d'écriture provenant des n circuits d'entrée, de secondes entrées (REC) de données, et d'une entrée (E/L) de commande qui reçoit le signal de rythme local,
— une mémoire morte (25), dite mémoire de priorité, munie d'entrées d'adresse reliées aux sorties de la mémoire d'état, de premières sorties (REC) reliées aux secondes entrées de données du multiplexeur d'écriture de la mémoire d'état, de deuxièmes sorties (DEC), et d'une troisième sortie (BL) reliée à l'entrée de blocage du circuit d'adressage séquentiel en lecture,
— un décodeur (28) muni d'entrées reliées aux deuxièmes sorties (DEC) de la mémoire de priorité et de n sorties ($V_1$-$V_4$) reliées au circuit de validation d'une mémoire de gestion parmi « n ».

4. Dispositif selon les revendications 1, 2 et 3, caractérisé en ce que le circuit de validation d'une mémoire de gestion parmi « n » est constitué par « n » multiplexeurs (20, 21, 22, 23) munis chacun d'une entrée (CEA1-CEA4) de données qui reçoit le signal de commande d'écriture provenant de l'un des circuits d'entrée, d'une deuxième entrée ($V_1$-$V_4$) de données reliée à l'une des sorties du décodeur, d'une

6

entrée de commande (E/L) qui reçoit le signal de rythme local et d'une sortie reliée à l'entrée de validation de l'une des mémoires de gestion.

5. Dispositif selon la revendication 1 dans lequel les données numériques à aiguiller sont constituées par des paquets, et dans lequel les circuits d'entrée fournissent uniquement les adresses de début de paquet, caractérisé en ce que les sorties (ADL1-ADL4) des « n » mémoires de gestion sont reliées aux entrées d'adresse de lecture des « n » mémoires d'attente *via* un compteur (30) commandé et incrémenté par le circuit de sortie.

6. Dispositif selon les revendications 1 et 2, dans lequel les données numériques à aiguiller sont constituées par des paquets de longueur variable, caractérisé en ce qu'il est prévu un circuit (35, 36, 37) d'interdiction de recouvrement de lecture et d'écriture dans les mémoires d'attente, comportant un compteur (35) incrémenté à chaque fois que le compteur d'adressage-écriture des mémoires de gestion est incrémenté, et décrémenté à chaque fois que le compteur d'adressage-lecture des mémoires de gestion est incrémenté, le débordement de ce compteur étant indiqué aux circuits d'entrée et son retour à zéro au circuit de sortie.

## Claims

1. A digital data switching device for switching data emitted by n input circuits to an output circuit, comprising on the one hand n active memories, designated as stand-by memories (1, 2, 3, 4) for storing respectively the digital data emitted by said n input circuits, and on the other hand a stand-by memory read management circuit which is able to store the succession of write addresses for data in the stand-by memory such that these data can be read according to the same succession, characterized in that the stand-by memory read management circuit comprises :
— n active memories, called management memories (10, 11, 12, 13), each associated to one of the n stand-by memories and designated to store the write addresses of the associated stand-by memory, the outputs of each management memory being connected to the read address inputs of the associated stand-by memory,
— a read/write sequential addressing circuit (14 to 19) which is common to the n management memories, said circuit being write-incremented at the time of each writing by an input circuit into one of said stand-by memories, and being read-incremented at the time of each reading of the stand-by memories by the output circuit,
— a circuit (24 to 28) for establishing the reading priority of said stand-by memories and for read-blocking of said sequential addressing circuit in the event of simultaneous emission by several input circuits,
— a circuit (20 to 23) for enabling one out of n management memories, the enabling operation being performed at the time of writing of said management memories by the input circuit which is associated to the management memory, and at the time of reading of the management memories by the circuit for establishing priority and blocking.

2. A device according to claim 1, in which each input circuit delivers a write control signal to the stand-by memory and in which the output circuit delivers a read control signal to the stand-by memories, characterized in that the sequential write/read addressing circuit comprises a write addressing counter (14) which is incremented by the output signal (CEA) of an OR-gate (18) receiving the write control signals (CEA1 to CEA4) from the n input circuits, a read addressing counter (15) which is incremented by the read control signal (CLA) from the output circuit, and a multiplexer (16) for addressing the management memories, said multiplexer being provided with first data inputs (ad$_E$) connected to the outputs of the read addressing counter, with second data inputs (ad$_L$) connected to the outputs of the read addressing counter, with outputs (ad) connected to the address inputs of the n management memories, and with a control input (E/L) which receives the local clock signal.

3. A device according to claims 1 and 2, characterized in that the priority-establishing and blocking circuits comprises :
— an active memory (24) called state memory of the input circuits, this memory being provided with address inputs (ad) connected to the outputs of the sequential addressing circuit, with a read-write selection input connected to the output of a read-write selection multiplexer (27) for the state memory, this multiplexer being itself provided with a first data input receiving the output signal (CEA) of the OR-gate (18) which receives the write control signals from the n input circuits, with a second data input (CLA), which receives the read control signal from the output circuit, and with a control input (E/L) which receives the local clock signal, the data inputs of the state memory being connected to the outputs of a write multiplexer (26) of the state memory, this latter multiplexer being provided with first data inputs (CEA1 to CEA4) which receive write control signals from the n input circuits, with second data inputs (REC) and with a control input (E/L) which receives the local clock signal,
— a read-only-memory (25), called priority memory and provided with address inputs which are connected to the outputs of the state memory, with first outputs (REC), which are connected to the second data inputs of the write multiplexer of the state memory, with second outputs (DEC) and with a third output (BL) which is connected to the blocking input of the sequential read addressing circuit,

— a decoder (28) having inputs which are connected to the second outputs (DEC) of the priority memory, and n outputs ($V_1$ to $V_4$) which are connected to the circuit for enabling one out of n management memories

4. A device according to claims 1, 2 and 3, characterized in that the circuit for enabling one out of n management memories consists of n multiplexers (20 to 23) each provided with a data input (CEA1 to CEA4) receiving the write control signal from one of the inputs circuits, with a second data input ($V_1$ to $V_4$) connected to one of the decoder outputs, with a control input (E/L) receiving the local clock signal and with an output connected to the enabling input of one of the management memories.

5. A device according to claim 1, in which the digital data to be switched consist of packets and in which the input circuit only delivers the start addresses of the packet, characterized in that the outputs (ADL1 to ADL4) of the n management memories are connected to the read address inputs of the n stand-by memories *via* a counter (30) which is controlled and incremented by the output circuit.

6. A device according to claims 1 and 2, which the digital data to be switched consist of packets of variable length, characterized in that a circuit (35, 36, 37) is provided for inhibiting the overlap between read and write operations in the stand-by memories, this circuit comprising a counter (35) which is incremented each time said write addressing counter of the management memories is incremented, and which is decremented each time said read addressing counter of said management memories is incremented, overflow of said counter being signalled to the input circuit and the return to zero of said counter being signalled to the output circuit.


**Ansprüche**

1. Vorrichtung zur Durchschaltung digitaler Daten von n Eingangsschaltkreisen auf einen Ausgangsschaltkreis, mit n Arbeitsspeichern, Wartespeicher genannt (1, 2, 3, 4), die je für die Speicherung der von einem der n Eingangsschaltkreise ausgehenden digitalen Daten bestimmt sind, und mit einem Lesesteuerschaltkreis für die Wartespeicher, der die Folge von Datenschreibadressen in den Wartespeichern zu speichern vermag, um das Auslesen dieser Daten in gleicher Reihenfolge zu ermöglichen, dadurch gekennzeichnet, daß der Lesesteuerschaltkreis der Wartespeicher

— n Arbeitsspeicher, Steuerspeicher genannt (10, 11, 12, 13), die je einem der n Wartespeicher zugeordnet sind und je die Schreibadressen des zugeordneten Wartespeichers speichern können, wobei Ausgänge der Steuerspeicher an die Leseadresseeingänge des zugeordneten Wartespeichers angeschlossen sind,

— einen den n Steuerspeichern gemeinsamen beim Lesen und Schreiben sequentiellen Adressenschaltkreis (14-19), der bei jedem Schreiben durch einen Eingangsschaltkreis in den Wartespeichern und bei jedem Lesevorgang der Wartespeicher durch den Ausgangsschaltkreis inkrementiert wird,

— einen den Vorrang des Lesens der Wartespeicher sichernden und den sequentiellen Adressenschaltkreis in der Lesephase blockierenden Schaltkreis (24-28), wenn gleichzeitig mehrere Eingangsschaltkreise Daten liefern,

— und einen Aktivierschaltkreis (20-23) zur Aktivierung eines von n Steuerspeichern aufweist, wobei die Aktivierung in der Schreibphase der Steuerspeicher vom diesem Speicher zugeordneten Eingangsschaltkreis und in der Lesephase der Steuerspeicher vom den Vorrang und die Blockierung sichernden Schaltkreis bewirkt wird.

2. Vorrichtung nach Anspruch 1, in der jeder Eingangsschaltkreis ein Schreibsteuersignal für die Wartespeicher liefert und in der der Ausgangsschaltkreis ein Lesesteuersignal für die Wartespeicher liefert, dadurch gekennzeichnet, daß der sequentielle Schreib- und Leseadressierschaltkreis einen Schreibadressenzähler (14), der vom Ausgangssignal (CEA) eines ODER-Tors (18), welches die Schreibsteuersignale (CEA1-CEA4) von den n Eingangsschaltkreisen zugeführt erhält, inkrementiert wird, weiter einen Leseadressenzähler (15), der vom vom Ausgangsschaltkreis kommenden Lesesteuersignal (CLA) inkrementiert wird, und schließlich einen Multiplexer (16) zur Adressierung der Steuerspeicher enthält, der mit den Ausgängen des Schreibadressenzählers verbundene erste Dateneingänge ($ad_E$), mit den Ausgängen des Leseadressenzählers verbundene zweite Dateneingänge ($ad_L$), mit den Adresseneingängen der n Steuerspeicher verbundene Ausgänge (ad) und einen Steuereingang (E/L) aufweist, der ein lokales Taktsignal enthält.

3. Vorrichtung nach den Ansprüchen 1 und 2, dadurch gekennzeichnet, daß der Vorrangs- und Blockierschaltkreis

— einen Arbeitsspeicher (24), Zustandsspeicher für die Eingangsschaltkreise genannt, mit Adresseneingängen (ad), die an die Ausgänge des sequentiellen Adressenschaltkreises angeschlossen sind, mit einem Lese-Schreibauswahleingang der an den Ausgang eines Lese-Schreibauswahlmultiplexers (27) für den Zustandsspeicher angeschlossen ist, wobei letzterer selbst einen ersten Dateneingang, der das Ausgangssignal (CEA) des die Schreibsteuersignale von den n Eingangsschaltkreisen empfangenden ODER-Tors (18) zugeführt erhält, einen zweiten Dateneingang (CLA), der das Lesesteuersignal vom Ausgangsschaltkreis zugeführt erhält, und einen Steuereingang (E/L) aufweist, der das lokale Taktsignal empfängt, wobei die Dateneingänge des Zustandsspeichers mit den Ausgängen eines Schreibmultiplexers (26) des Zustandsspeichers verbunden sind und der Multiplexer selbst erste Dateneingänge (CEA1 bis CEA4), die die Schreibsteuersignale von den n Eingangsschaltkreisen empfangen, zweite Dateneingänge (REC) und einen Steuereingang (E/L) aufweist, der das lokale Taktsignal empfängt,

— einen Festspeicher (25), Vorrangsspeicher genannt, mit Adresseneingängen, die mit den Ausgängen des Zustandsspeichers verbunden sind, mit ersten Ausgängen (REC), die mit den zweiten Dateneingängen des Schreibmultiplexers des Zustandsspeichers verbunden sind, mit zweiten Ausgängen (DEC) und mit einem dritten Ausgang (BL), der an den Blockiereingang des sequentiellen Leseadressenschaltkreises angeschlossen ist,

— und einen Dekoder (28) enthält, mit Eingängen, die an die zweiten Ausgänge (DEC) des Vorrangsspeichers angeschlossen sind, und mit n Ausgängen ($V_1$ bis $V_4$), die an den Aktivierungsschalt-kreis eines der n Steuerspeicher angeschlossen sind.

4. Vorrichtung nach den Ansprüchen 1, 2 und 3, dadurch gekennzeichnet, daß der Aktivierungsschaltkreis eines der n Steuerspeicher aus n Multiplexern (20 bis 23) besteht, die je einen Dateneingang (CEA1 bis CEA4) zum Empfang des von einem der Eingangsschaltkreise kommenden Schreibsteuer-signals, einen zweiten Dateneingang ($V_1$ bis $V_4$), der mit einem der Dekoderausgänge verbunden ist, einen Steuereingang (E/L), der das lokale Taktsignal empfängt, und einen Ausgang enthalten, der an den Aktivierungseingang eines der Steuerspeicher angeschlossen ist.

5. Vorrichtung nach Anspruch 1, in der die durchzuschaltenden digitalen Daten aus Paketen bestehen und in der die Eingangsschaltkreise nur die Anfangsadressen des Pakets liefern, dadurch gekennzeichnet, daß die Ausgänge (ADL1 bis ADL4) der n Steuerspeicher mit den Leseadresseneingängen der n Wartespeicher über einen Zähler (30) verbunden sind, der vom Ausgangsschaltkreis gesteuert und inkrementiert wird.

6. Vorrichtung nach den Ansprüchen 1 und 2, in der die durchzuschaltenden digitalen Daten aus Paketen variabler Länge bestehen, dadurch gekennzeichnet, daß ein Schaltkreis (35, 36, 37) vorgesehen ist, der eine Überlappung der Lese- und Schreibphasen in den Wartespeichern verbietet und einen Zähler (35) aufweist, der jedesmal inkrementiert wird, wenn der Schreibadressenzähler der Steuerspeicher inkrementiert wird, und jedesmal dekrementiert wird, wenn der Leseadressenzähler der Steuerspeicher inkrementiert wird, wobei das Überschreiten der Zählkapazität den Eingangsschaltkreisen angezeigt wird und die Rückkehr zum Zählzustand 0 dem Ausgangsschaltkreis gemeldet wird.

Fig. 1

0 033 672

Fig.2

Fig.3

0 033 672